# DEMANDE DE BREVET EUROPEEN

(11) **EP 4 759 639 A1**
(43) Date de publication de la demande: **17.06.2026**
(21) Numéro de dépôt: 25212783.2
(22) Date de dépôt: 31.10.2025
(51) Int. Cl.: B60R 19/24

(54) **SUPPORT CENTRAL DE PARE-CHOCS COMPRENANT UN BORD TOMBÉ**

(30) Priorité: 11.12.2024 FR 2413848
(71) Demandeur: Stellantis Auto SAS, 78300 Poissy (FR)
(72) Inventeur: MAURICE, SEBASTIEN, 25360 GONSANS (FR); THOR, TOU, 25150 PONT DE ROIDE VERMONDANS (FR); BESSETTE, DAMIEN, 25150 ECOT (FR); BORNIER, PAUL, 70400 LUZE (FR); MAGAS, MIHAELA MARIA, 90800 ARGIESANS (FR); TROPEE, NICOLAS, 90000 BELFORT (FR)
(74) Mandataire: BCIP

(57) **Abrégé**

L'invention concerne un support central de pare-chocs comprenant un bord tombé.

Le support central de pare-chocs (2) comprend un côté inférieur (8) destiné à être orienté vers la chaussée lorsque ledit support central est monté sur ledit véhicule automobile, et un retour inférieur s'étendant depuis ledit côté inférieur en direction du panneau de carrosserie, de sorte à être perpendiculaire ou sensiblement perpendiculaire audit panneau lorsque ledit support central est monté sur ledit véhicule automobile. L'invention est remarquable en ce que le retour inférieur est prolongé par un bord tombé (12) s'étendant perpendiculairement ou sensiblement perpendiculairement au retour inférieur, de sorte que le bord tombé présente une face de contact destinée à prendre appui contre ledit panneau de carrosserie, ladite face de contact ayant une surface supérieure à l'épaisseur du retour inférieur.

## Description

La présente invention concerne le domaine technique des supports de pare-chocs arrière pour véhicules automobiles. Plus particulièrement, elle concerne un support central de pare-chocs arrière destiné à être fixé sur un panneau arrière d'un véhicule.

### Arrière-plan technologique

Le pare-chocs arrière d'un véhicule automobile est un élément de carrosserie ayant pour fonction principale d'absorber l'énergie des chocs à faible vitesse et de protéger les organes mécaniques situés à l'arrière du véhicule. Il est généralement fixé sur la structure du véhicule par l'intermédiaire de supports, comprenant typiquement un support central et deux supports latéraux.

Le support central de pare-chocs arrière est traditionnellement réalisé en matière plastique et comprend une partie principale destinée à être fixée sur le panneau arrière du véhicule, généralement par soudage ou vissage. Cette partie principale comporte des surfaces d'appui et des moyens de centrage permettant de positionner précisément le pare-chocs sur la carrosserie.

Pour un besoin d'étanchéité, le support central de pare-chocs arrière comprend classiquement un appui inférieur (ou retour inférieur) venant en contact avec le panneau arrière en partie basse. Cette solution technique vise à limiter la rotation du support central lorsqu'un poids est exercé sur la partie supérieure du pare-chocs, effort susceptible d'écarter la partie supérieure du pare-chocs du panneau arrière et de créer une voie d'entrée pour l'eau de pluie. Ce retour inférieur, en prenant appui contre le panneau arrière, assure ainsi un meilleur maintien du pare-chocs, notamment lorsqu'une personne s'assoit dessus.

Toutefois, cette solution technique présente un inconvénient majeur en cas de collision arrière. En effet, la présence du retour inférieur a pour conséquence de transmettre le choc de façon très localisée sur le panneau arrière, le long de la ligne de contact entre ces deux éléments. La surface de contact étant faible, la pression exercée localement devient très significative et entraîne un enfoncement profond du panneau arrière sur une longueur importante. Ces déformations plastiques sont particulièrement critiques, car elles affectent la structure même du véhicule, impactant négativement la prestation de choc et, par conséquent, la classification du véhicule utilisée pour le calcul de primes d'assurance.

L'invention vise à résoudre cette problématique en proposant un support central pare-chocs arrière moins susceptible d'endommager le panneau arrière sur lequel il est fixé lorsqu'il comprend un retour inférieur tel que décrit ci-dessus.

### Objet de l'invention

Un support central de pare-chocs selon l'invention est destiné à être fixé sur un panneau de carrosserie d'un véhicule automobile. Il comprend une partie principale destinée à être en vis-à-vis dudit panneau de carrosserie, ladite partie principale comprenant un côté inférieur destiné à être orienté vers la chaussée lorsque ledit support central est monté sur ledit véhicule automobile, et un retour inférieur s'étendant depuis ledit côté inférieur en direction du panneau de carrosserie, de sorte à être perpendiculaire ou sensiblement perpendiculaire audit panneau de carrosserie.

L'invention est remarquable en ce que le retour inférieur est prolongé par un bord tombé s'étendant perpendiculairement ou sensiblement perpendiculairement au retour inférieur, de sorte que le bord tombé présente une face de contact destinée à prendre appui contre ledit panneau de carrosserie, ladite face de contact ayant une surface supérieure à l'épaisseur du retour inférieur.

La présence de ce bord tombé permet de répartir les efforts sur le panneau de carrosserie sans engendrer de déformation plastique de celui-ci, et ce pour deux raisons principales. Premièrement, il permet d'augmenter significativement la surface de contact du support central, répartissant ainsi l'effort sur une plus grande surface et réduisant les déformations locales. Deuxièmement, il permet de rediriger une partie de l'effort dans le sens longitudinal de la feuillure inférieure du panneau, exploitant ainsi la meilleure résistance de la tôle en compression plutôt qu'en flexion.

Selon un autre mode de réalisation de l'invention, le bord tombé présente une hauteur d'au moins 10 millimètres. La hauteur du bord tombé est mesurée selon une direction perpendiculaire ou sensiblement perpendiculaire au retour inférieur. Cette dimension minimale garantit une surface de contact adaptée pour une meilleure répartition des efforts mécaniques exercés sur le panneau lorsque le pare-chocs subit un impact frontal.

Selon un autre mode de réalisation de l'invention, le bord tombé s'étend sur au moins 80%, de préférence sur toute la longueur transversale du retour inférieur. En d'autres termes, le bord tombé s'étend sur au moins 80% ou plus, du bord du côté inférieur destiné à être en vis-à-vis du panneau. Cette configuration assure une répartition plus homogène des efforts mécaniques exercés par le côté inférieur sur le panneau en cas de collision.

Selon un autre mode de réalisation de l'invention particulièrement avantageux, le bord tombé est configuré pour être positionné au plus près d'une zone de renfort dudit panneau de carrosserie. Cette disposition optimise la transmission des efforts vers les zones les plus rigides du panneau de carrosserie.

Selon un autre mode de réalisation, le support comprend au moins une nervure s'étendant depuis le retour inférieur jusqu'au bord tombé. Ces nervures sont préférentiellement configurées pour maintenir le bord tombé parallèle ou sensiblement parallèle à la surface du panneau de carrosserie, favorisant ainsi un contact plan optimal entre ces deux éléments.

Selon une variante de réalisation, le bord tombé peut être de forme complémentaire au panneau de carrosserie sur lequel il est destiné à prendre appui, afin de permettre une surface de contact plus importante entre ces éléments.

Selon un autre mode de réalisation de l'invention, le retour inférieur et le bord tombé sont configurés pour transformer un effort vertical appliqué sur le support central de pare-chocs en un effort longitudinal le long du panneau de carrosserie sur lequel prend appui ledit bord tombé.

Selon un autre mode de réalisation de l'invention, le support central de pare-chocs est destiné à être fixé sur un panneau de carrosserie arrière d'un véhicule automobile. Cette application est particulièrement pertinente, car la prestation de choc de réparabilité devient de plus en plus critique sur les nouveaux véhicules, notamment en raison de l'augmentation des masses (particulièrement pour les véhicules électriques) et de la hausse continue des coûts de réparation.

Selon un autre mode de réalisation avantageux, le support central de pare-chocs est réalisé d'une seule pièce à partir d'un matériau comprenant des polymères synthétiques de préférence. Ce mode de réalisation permet notamment une fabrication plus simple et plus économique, l'optimisation du bord tombé ne nécessitant qu'une modification mineure d'un moule existant par un simple usinage.

La solution proposée présente de nombreux avantages. Elle permet d'optimiser la performance en choc de réparabilité pour réduire le coût d'assurance, tout en étant simple à mettre en œuvre et facilement transposable sur d'autres véhicules à l'architecture similaire. De plus, elle est particulièrement économique comparée aux solutions complexes qu'elle permet d'éviter, ne nécessitant aucune modification conséquente de l'architecture existante d'un véhicule automobile.

Dans le contexte actuel où la prestation de choc de réparabilité devient de plus en plus critique, cette solution simple permettant de garantir l'intégrité de la base roulante après un petit choc subi au niveau d'un de ses pare-chocs, sans nécessiter de redressement conséquent du panneau supportant ledit pare-chocs.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un véhicule automobile comprenant un panneau de carrosserie et un support central de pare-chocs tel que décrit ci-dessus, le support central de pare-chocs est fixé audit panneau de carrosserie de telle sorte que la face de contact du bord tombé soit en appui contre ledit panneau de carrosserie.

De préférence, le véhicule automobile est équipé d'une motorisation électrique.

### Description des figures

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la [Fig. 1] illustre une vue en perspective d'un support central de pare-chocs selon l'invention, montrant notamment plusieurs bords tombés destinés à venir en contact avec un panneau arrière d'un véhicule automobile ;
- la [Fig. 2] illustre une vue en section transversale du support central de pare-chocs représenté à la figure 1, mettant notamment en évidence la hauteur d'un bord tombé renforcé par une nervure.

### Description détaillée de l'invention

Pour rappel, l'invention propose un support central pare-chocs arrière moins susceptible d'endommager le panneau arrière sur lequel il est fixé lorsqu'il comprend un retour tel que décrit ci-dessus.

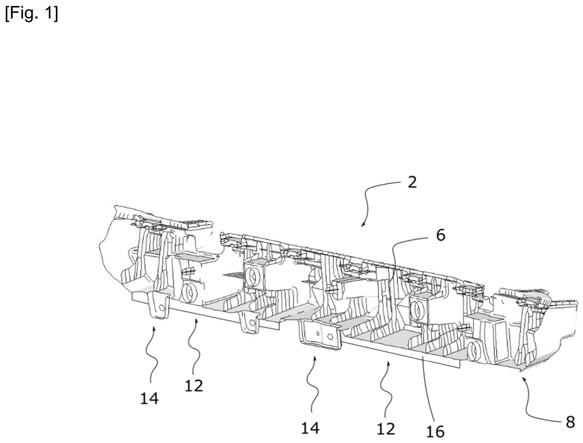

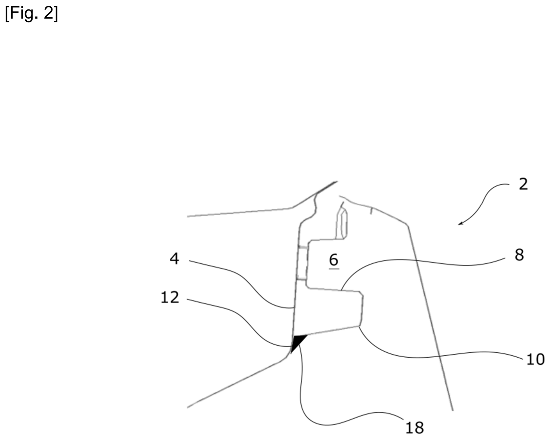

La figure 1 montre une vue en perspective d'un support central de pare-chocs 2 selon l'invention, tandis que la figure 2 présente une section transversale du support central, mettant particulièrement en évidence l'agencement du bord tombé et des nervures.

Comme illustré par la figure 2, le support central de pare-chocs 2 est conçu pour être fixé de manière rigide sur un panneau de carrosserie 4, notamment un panneau arrière. Dans sa configuration préférée, le support est réalisé en une seule pièce par moulage par injection d'une matière plastique. Cette matière peut être choisie parmi les polyamides renforcés ou les polypropylènes chargés de fibres de verre.

L'épaisseur générale du support central de pare-chocs 2 peut varier de 0,6 à 4 millimètres selon les zones, de préférence entre 1,5 et 3 millimètres, cette épaisseur étant optimisée pour assurer un compromis entre légèreté et résistance mécanique.

La partie principale 6 constitue la structure de base du support central de pare-chocs 2. Elle est configurée pour être positionnée en vis-à-vis du panneau de carrosserie 4, maintenue à une distance pouvant varier de 5 à 30 millimètres, de préférence entre 10 et 20 millimètres. Cette distance est déterminée notamment par les contraintes d'assemblage et les besoins en absorption d'énergie lors des chocs. La partie principale 6 comprend un côté inférieur 8 qui, une fois le support monté sur le véhicule automobile, est naturellement orienté vers la chaussée.

Depuis ce côté inférieur 8 s'étend un retour inférieur 10, dirigé vers le panneau de carrosserie 4. Il forme avec retour inférieur 10 un angle pouvant varier de 80 à 100 degrés, de préférence entre 88 et 92 degrés, assurant ainsi un positionnement quasi perpendiculaire par rapport au panneau de carrosserie 4. La longueur de ce retour inférieur 10 peut varier de 20 à 70 millimètres, de préférence entre 30 et 50 millimètres, cette dimension étant adaptée aux contraintes d'architecture du véhicule.

L'aspect innovant de l'invention réside principalement dans la configuration d'un bord tombé 12 qui prolonge le retour inférieur 10. Comme le montre la figure 1, le bord tombé 12 n'est pas continu sur toute la longueur du support mais présente des interruptions régulières destinées à l'intégration de pattes de fixation 14. Ces pattes de fixation, dont le nombre peut varier de 2 à 8, de préférence entre 3 et 6, sont configurées pour recevoir des vis de fixation assurant le maintien du support sur le panneau arrière.

Le bord tombé 12 s'étend perpendiculairement ou sensiblement perpendiculairement au retour inférieur 10, formant ainsi une surface de contact 16 parallèle ou sensiblement parallèle avec le panneau de carrosserie 4. Sa hauteur peut varier de 8 à 30 millimètres, de préférence entre 10 et 20 millimètres, la valeur minimale de 10 millimètres s'étant révélée particulièrement efficace. La face de contact du bord tombé 12 avec le panneau de carrosserie 4 présente une surface significativement supérieure à l'épaisseur du retour inférieur 10, dans un rapport pouvant varier de 1:2 à 1:10, de préférence entre 1:3 et 1:6.

Entre les zones d'interruption dédiées aux pattes de fixation 14, le bord tombé 12 s'étend sur des longueurs pouvant varier de 50 à 900 millimètres, de préférence entre 100 et 500 millimètres. Cette configuration discontinue permet d'optimiser la répartition des efforts tout en maintenant une fixation robuste du support central de pare-chocs 2. Selon un autre mode de réalisation, le bord tombé 12 pourrait être continu sur toute la longueur du support central de pare-chocs 2, la fixation étant alors assurée par d'autres moyens, comme le collage.

La figure 2 illustre une variante de réalisation particulièrement avantageuse de l'invention, comprenant des nervures 18 s'étendant entre le retour inférieur 10 et le bord tombé 12. Ces nervures 18, dont l'épaisseur peut varier de 1,5 à 4 millimètres, de préférence entre 2 et 3 millimètres, sont réparties régulièrement le long des sections de bord tombé 12. Leur nombre peut varier de 2 à 5 par section, de préférence 3, assurant ainsi un maintien optimal du parallélisme entre le bord tombé et la surface du panneau arrière.

La fixation du support central de pare-chocs 2 au panneau de carrosserie 4 peut être réalisée selon différentes méthodes, en fonction des matériaux et des contraintes de production. Dans le mode de réalisation préférentiel illustré, des vis traversant les pattes de fixation 14 assurent un maintien mécanique robuste.

Cette configuration présente plusieurs avantages significatifs. La présence du bord tombé 10 permet une répartition optimale des efforts sur une surface étendue du panneau de carrosserie 4, réduisant ainsi les risques de déformation localisée. La géométrie spécifique du bord tombé 12, combinée à son caractère discontinu, permet de rediriger une partie des efforts dans le sens longitudinal de la feuillure inférieure du panneau, exploitant la meilleure résistance de la tôle en compression plutôt qu'en flexion.

La solution proposée permet de gérer ces contraintes accrues sans nécessiter de renforcement structurel coûteux du panneau arrière.

La simplicité de la solution présente des avantages économiques significatifs. La modification nécessaire d'un moule d'injection pour intégrer le bord tombé 12 et les interruptions pour les pattes de fixation 14 représente un surcoût limité. Cette caractéristique permet une mise en œuvre peu coûteuse, y compris sur des projets en cours de développement ou en phase de mi-vie.

La conception proposée est facilement adaptable à différentes architectures de véhicules. Les dimensions du bord tombé, des nervures et des zones d'interruption peuvent être ajustées en fonction des spécificités de chaque modèle, tout en conservant les principes fondamentaux de l'invention. Cette flexibilité permet une standardisation des principes de conception tout en respectant les contraintes spécifiques de chaque projet.

En variante, le support pourrait être réalisé dans d'autres matériaux techniques, comme des composites thermoplastiques à fibres longues ou des alliages légers, les dimensions étant alors adaptées aux caractéristiques mécaniques spécifiques du matériau choisi. De même, le nombre et la disposition des pattes de fixation pourraient être modifiés en fonction des contraintes particulières de chaque application, tout en maintenant le principe essentiel du bord tombé discontinu.

## Revendications

1. Support central de pare-chocs (2) destiné à être fixé sur un panneau de carrosserie (4) d'un véhicule automobile, comprenant une partie principale (6) destinée à être en vis-à-vis dudit panneau de carrosserie (4), ladite partie principale (6) comprenant un côté inférieur destiné à être orienté vers la chaussée lorsque ledit support central est monté sur ledit véhicule automobile, et un retour inférieur (10) s'étendant depuis ledit côté inférieur en direction du panneau de carrosserie, de sorte à être perpendiculaire ou sensiblement perpendiculaire audit panneau de carrosserie lorsque ledit support central est monté sur ledit véhicule automobile, **caractérisé en ce que** le retour inférieur est prolongé par un bord tombé (12) s'étendant perpendiculairement ou sensiblement perpendiculairement au retour inférieur, de sorte que le bord tombé présente une face de contact destinée à prendre appui contre ledit panneau de carrosserie (4), ladite face de contact ayant une surface supérieure à l'épaisseur du retour inférieur.

2. Support central de pare-chocs selon la revendication 1, **caractérisé en ce que** ledit bord tombé (12) présente une hauteur d'au moins 10 millimètres.

3. Support central de pare-chocs selon l'une des revendications 1 ou 2, **caractérisé en ce que** ledit bord tombé (12) s'étend sur toute la longueur transversale dudit retour inférieur (10).

4. Support central de pare-chocs selon l'une quelconque des revendications précédentes, **caractérisé en ce que** ledit bord tombé (12) est configuré pour être positionné au plus près d'une zone de renfort dudit panneau de carrosserie (4).

5. Support central de pare-chocs selon l'une quelconque des revendications précédentes, **caractérisé en ce qu'**il comprend au moins une nervure (18) s'étendant entre ledit retour inférieur (10) et ledit bord tombé (12).

6. Support central de pare-chocs selon la revendication 5, **caractérisé en ce que** lesdites nervures (18) sont configurées pour maintenir ledit bord tombé (12) parallèle à la surface dudit panneau de carrosserie (4).

7. Support central de pare-chocs selon l'une quelconque des revendications précédentes, **caractérisé en ce que** ledit retour inférieur (10) et ledit bord tombé (12) sont configurés pour transformer un effort vertical appliqué sur ledit support en un effort longitudinal le long dudit panneau de carrosserie (4).

8. Support central de pare-chocs selon l'une quelconque des revendications précédentes, **caractérisé en ce qu'**il est destiné à être fixé sur un panneau de carrosserie arrière (4) dudit véhicule automobile.

9. Support central de pare-chocs selon l'une quelconque des revendications précédentes, **caractérisé en ce qu'**il est réalisé d'une seule pièce en matière plastique.

10. Véhicule automobile comprenant un panneau de carrosserie (4) et un support central de pare-chocs (2) selon l'une quelconque des revendications 1 à 9, **caractérisé en ce que** ledit support central de pare-chocs (2) est fixé audit panneau de carrosserie (4) de telle sorte que ladite face de contact dudit bord tombé (12) soit en appui contre ledit panneau de carrosserie (4).
